# EUROPEAN PATENT SPECIFICATION

(11) **EP 4 612 925 B1**
(45) Date of publication and mention of the grant of the patent: **16.09.2026**
(21) Application number: 23810210.7
(22) Date of filing: 26.10.2023
(51) Int. Cl.: H04W 12/06, H04W 12/02, H04W 12/03

(54) **METHODS AND APPARATUS FOR PRIVACY PROTECTION USING EXTENSIBLE AUTHENTICATION PROTOCOL SECURITY IN A 5G SYSTEM**
VERFAHREN UND VORRICHTUNG FÜR DATENSCHUTZ UNTER VERWENDUNG VON ERWEITERBARER AUTHENTIFIZIERUNGSPROTOKOLLSICHERHEIT IN EINEM 5G-SYSTEM
PROCÉDÉS ET APPAREIL DE PROTECTION DE LA VIE PRIVÉE UTILISANT UNE SÉCURITÉ DE PROTOCOLE D'AUTHENTIFICATION EXTENSIBLE DANS UN SYSTÈME 5G

(30) Priority: 03.11.2022 US 202263422199 P; 16.12.2022 US 202263433315 P
(43) Date of publication of application: 10.09.2025
(73) Proprietor: InterDigital Patent Holdings, Inc., Wilmington, DE 19809 (US)
(72) Inventor: BRUSILOVSKY, Alec, Conshohocken, Pennsylvania 19428 (US); WANG, Zhibi, Conshohocken, Pennsylvania 19428 (US); FERDI, Samir, Montreal, Québec H3A 3G4 (CA)
(74) Representative: Interdigital
(86) International application number: PCT/US2023/035986
(87) International publication number: WO 2024/097070

(56) References cited:
- INTERDIGITAL: "Padding SUPIs in NAI format with Random Length of Characters for non-null schemes", vol. SA WG3, no. e-meeting; 20211108 - 20211119, 30 October 2021 (2021-10-30), XP052073192, Retrieved from the Internet <URL:https://ftp.3gpp.org/tsg_sa/WG3_Security/TSGS3_105e/Docs/S3-213902.zip S3-213902.docx> [retrieved on 20211030]
- "3rd Generation Partnership Project; Technical Specification Group Services and System Aspects; Study of privacy of identifiers over radio access; (Release 18)", 20 October 2022 (2022-10-20), XP052272057, Retrieved from the Internet <URL:https://ftp.3gpp.org/tsg_sa/WG3_Security/TSGS3_108e-AdHoc/Docs/S3-223133.zip draft_33.870-0.4.0-rm.docx> [retrieved on 20221020]

## Description

### CROSS REFERENCE TO RELATED APPLICATIONS

This application claims the benefit of US provisional patent application No. 63/422,199 filed 3 November 2022 and US provisional patent application No. 63/433,315 filed 16 December 2022.

### BRIEF DESCRIPTION OF THE DRAWINGS

Further prior art is: INTERDIGITAL: "Padding SUPIs in NAI format with Random Length of Characters for non-null schemes",3GPP DRAFT; S3-213902, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. SA WG3, no. e-meeting; 20211108 - 20211119 30 October 2021 (2021-10-30), XP052073192,Retrieved from the Internet:URL:https://ftp.3gpp.org/tsg_sa/WG3_Security/TSGS3_105e/Docs/S3-213902.zip S3-213902.docx

The invention is defined by the appended claims.

A more detailed understanding may be had from the detailed description below, given by way of example in conjunction with the drawings appended hereto. Figures in such drawings, like the detailed description, are exemplary. As such, the Figures and the detailed description are not to be considered limiting, and other equally effective examples are possible and likely. Furthermore, like reference numerals ("ref. ") in the Figures ("FIGs.") indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment:
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a high level block diagram illustrating basic padding operation in accordance with some embodiments;
FIG. 3 is a signal flow diagram flow for obscuring the length of identities and/or parameters during EAP-TLS SNPN authentication (without AAA) in accordance with some embodiments;
FIGS. 4A, 4B, 4C, 4D, and 4E comprise a signal flow diagram for obscuring the length of identities and/or parameters during EAP-TTLS SNPN authentication with AAA server in accordance with some embodiments;
FIGS. 5A, 5B, 5C, and 5D comprise a signal flow diagram for obscuring the length of identities and/or parameters during EAP-TTLS SNPN authentication with AAA server in accordance with other embodiments; and
FIG. 6 is an example flow diagram of a method implemented by a 5G core network apparatus according to the principles of the disclosure.

### DETAILED DESCRIPTION

### INTRODUCTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components, and circuits have not been described in detail, so as not to obscure the following description. Further, embodiments and examples not specifically described herein may be practiced in lieu of, or in combination with, the embodiments and other examples described, disclosed, or otherwise provided explicitly, implicitly and/or inherently (collectively "provided") herein.

### EXAMPLE COMMUNICATION SYSTEMS

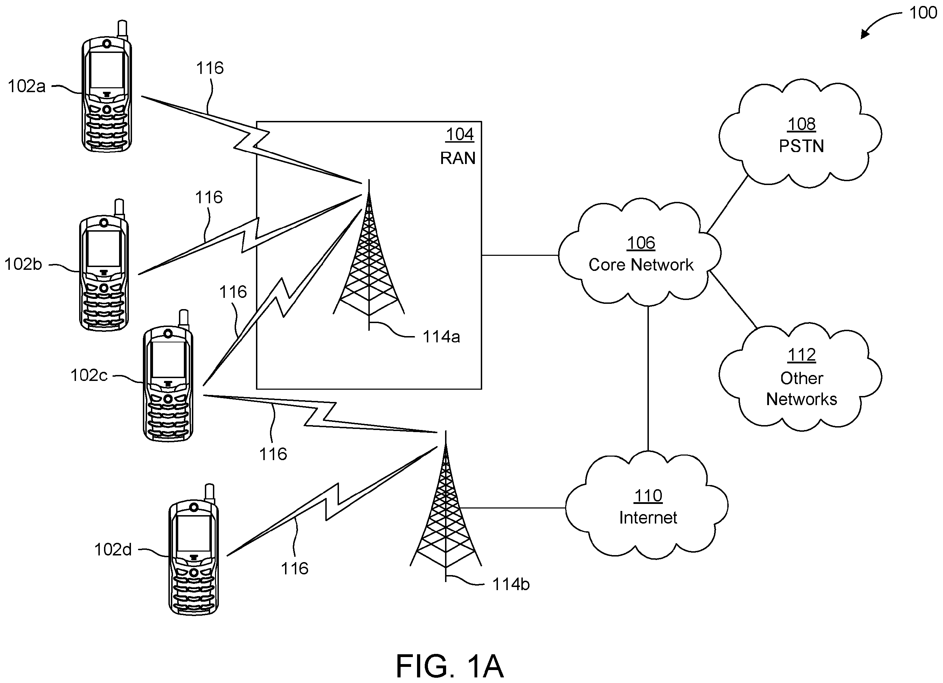

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

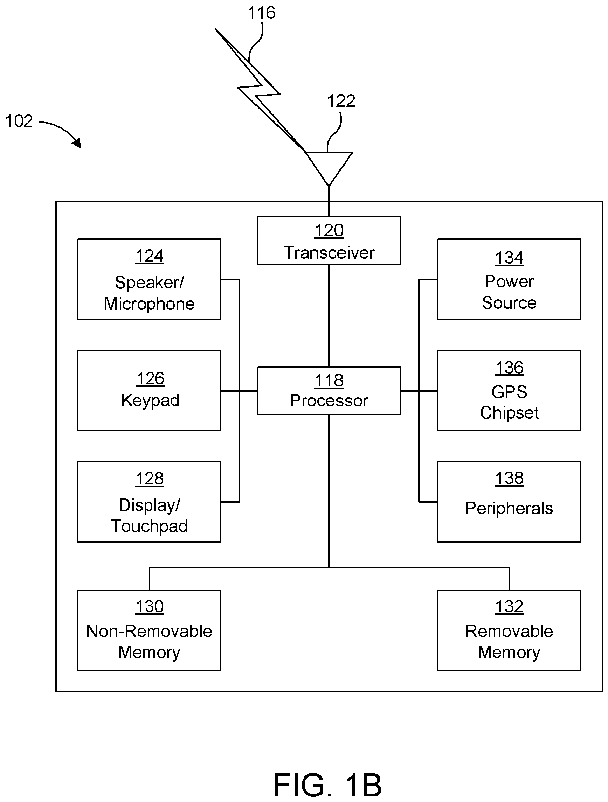

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134 and may be configured to distribute and/or control the power to the other components in the WTRU 102. The power source 134 may be any suitable device for powering the WTRU 102. For example, the power source 134 may include one or more dry cell batteries (e.g., nickelcadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit 139 to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

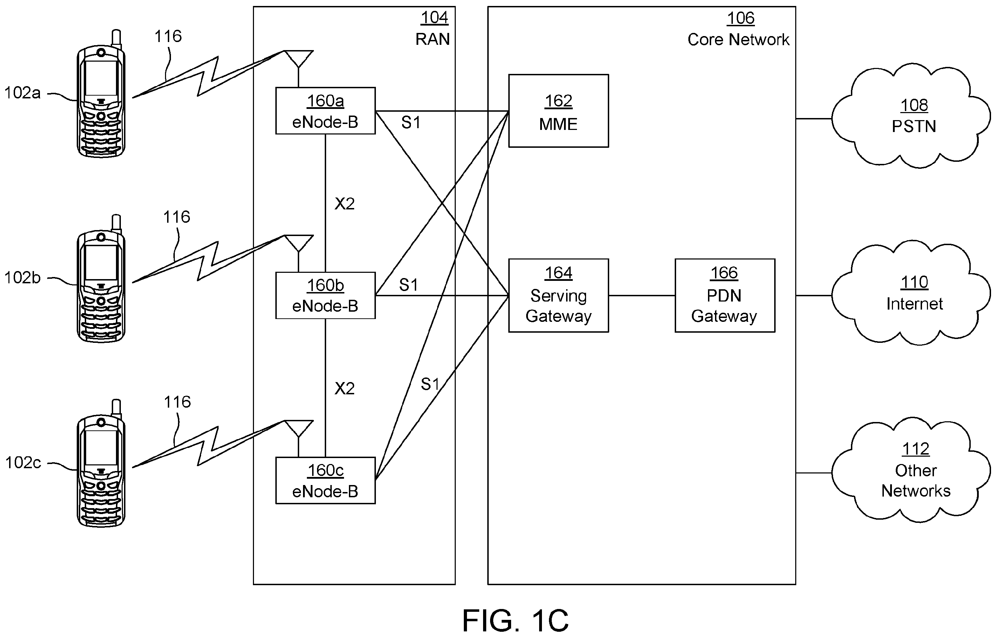

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.1 1af and 802.11ah. The channel operating bandwidths, and carriers, are reduced in 802.1 1af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

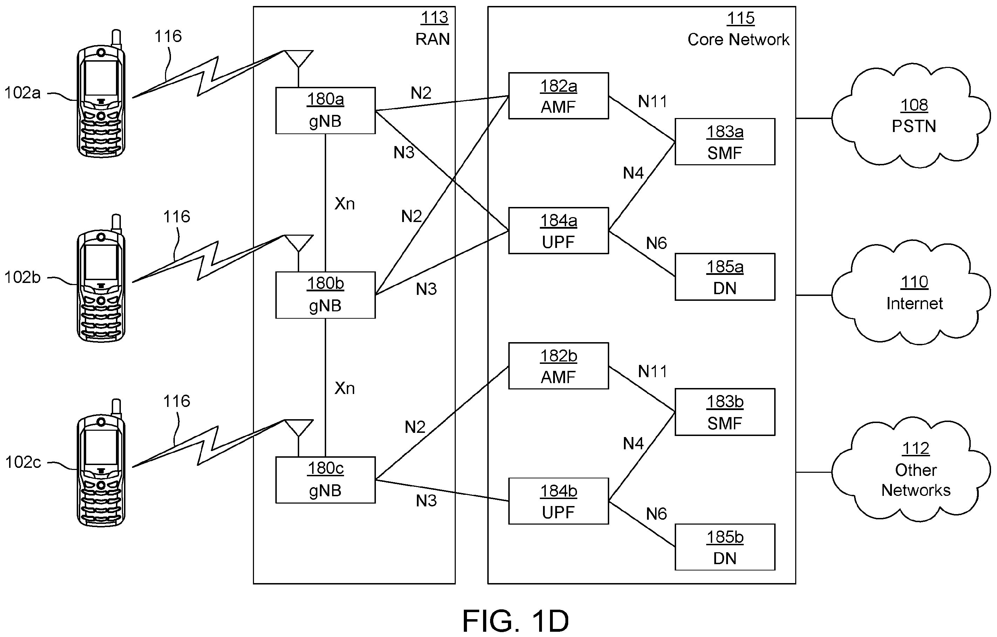

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 180b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the uplink (UL) and/or downlink (DL), support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF a82a, 182b may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figs. 1A-1D, and the corresponding description of Figs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Examples provided herein do not limit applicability of the subject matter to other wireless technologies, e.g., using the same or different principles as may be applicable.

As explained herein, a wireless transmit/receive unit (WTRU) may be an example of a user equipment (UE). Hence the terms UE and WTRU may be used with equal scope herein.

### Authentication in 5G

5G system supported authentication schemes include Extensible Authentication Protocol Transport Layer Security (EAP-TLS) and Extensible Authentication Protocol Tunneled Transport Layer Security (EAP-TTLS).

When some EAP based methods are used, e.g., EAP-TLS and EAP-TTLS, an anonymous Subscription Concealed Identifier (SUCI) can be used, and the actual Subscription Permanent Identifier (SUPI) is sent after an EAP secure channel is established, e.g., the TLS tunnel. Encryption may be performed using cyphers such as Advanced Encryption Standard with Galios/Counter Mode (AES GCM), Advanced Encryption Standard-Counter with Cipher Block Chaining-Mandatory Access Control (CBC-MAC) (AES CCM), or Advanced Encryption Standard-Counter with Cipher Block Chaining (AES CBC).

3GPP is currently studying aspects of privacy for the subscription identifier 3GPP TR 33.870 v0.4.0. The following issues apply when using the current authentication procedures described above (e.g., EAP-TLS and EAP-TTLS).

The length of SUPI in NAI type will be available for a passive eavesdropper leaking SUPI privacy.

IETF RFC5246 The Transport Layer Security (TLS) Protocol states: "Any protocol designed for use over TLS must be carefully designed to deal with all possible attacks against it. As a practical matter, this means that the protocol designer must be aware of what security properties TLS does and does not provide and cannot safely rely on the latter. Note in particular that type and length of a record are not protected by encryption".

Namely, the procedures described in 3GPP TS 33.501, clauses B, U, and I will leak privacy of the WTRU identifier based on potential exposure of its length.

Thus, it is desirable to enhance existing privacy protection of SUPI in NAI format when transported as part of EAP-TLS/EAP-TTLS authentication protocols.

Presently, 3GPP TS 33.501 supports Stand-alone Non-Public Network (SNPN) authentication using EAP-TLS and EAP-TTLS. However, the length of the identities (e.g., certificates) and/or parameters (e.g., credentials, tokens, passwords) is not protected, and when the length-preserving encryption algorithms are used, the encrypted values will allow the attacker to glean the difference (or the "sameness") in the identities and/or parameters length and leak privacy-related information, i.e., so called privacy "breaderumbs". In addition, when the length of the password is known to the attacker, it will be much easier to perform password cracking attacks, e.g., Brute Force Attacks.

Methods of obscuring the length of the identity and/or parameters in cryptotext inside EAP-TLS and EAP-TTLS tunnels are desirable to protect privacy leaks or credential/password/token strength.

### Security Enhancement

Embodiments described herein address the need to obscure the length of identities and/or parameters during SNPN authentication using EAP-TLS and EAP-TTLS with and without an Authentication, Authorization and Accounting (AAA) server.

The embodiments described herein are based on the principle that using random padding would remedy the privacy attack where the attacker can observe the length of the cryptotext protected by EAP-TLS or EAP-TTLS tunnel and assume that the cryptotext length corresponds to the cleartext length.

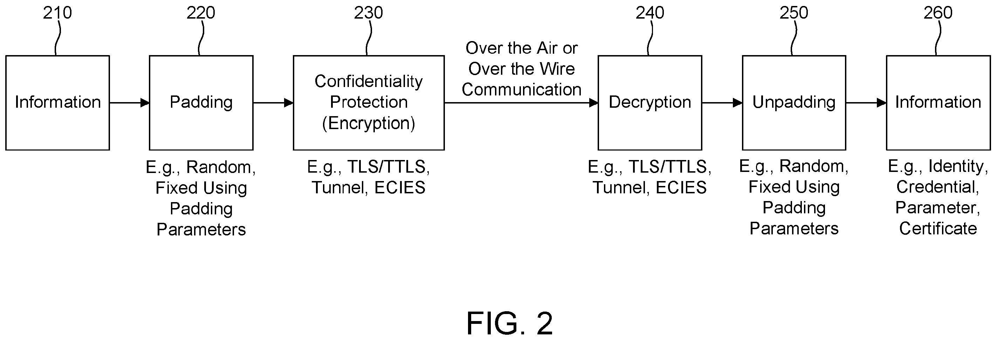

FIG. 2 is a high level block diagram illustrating basic operations in accordance with these principles. As shown, the identity and/or parameters in cryptotext inside EAP-TLS and EAP-TTLS tunnels (210) is fed into a padding algorithm (220), which pads the information to a length that is unpredictable and, therefore, does not reveal information as to the actual length of the identity and/or parameters in cryptotext inside EAP-TLS and EAP-TTLS tunnels. One exemplary padding process may be found in PCT Patent Publication WO 2023/059773 titled "Methods, Architectures, Apparatuses and Systems for Concealing Data".

Next, the padded information is encrypted for transmission (230). At the receiving node, the information is decrypted (240) and unpadded (250) to reveal the original identities, credentials, parameters, etc. (260).

The embodiments described herein make the length of the encrypted identities, credentials, and parameters unpredictable and, therefore, remedy the possibility of privacy attacks based on observation of the length and making a connection with the length of the cryptotext transmitted inside, e.g., the EAP-TLS/EAP-TTLS, security tunnels.

### WTRU and network based embodiment to obscure the length of identities and/or parameters during EAP-TLS SNPN authentication (without AAA)

A first embodiment applies the principles described herein above to provide a WTRU and network based means to obscure the length of identities and/or parameters during EAP-TLS SNPN authentication (without AAA) using padding of the certificate before TLS encryption.

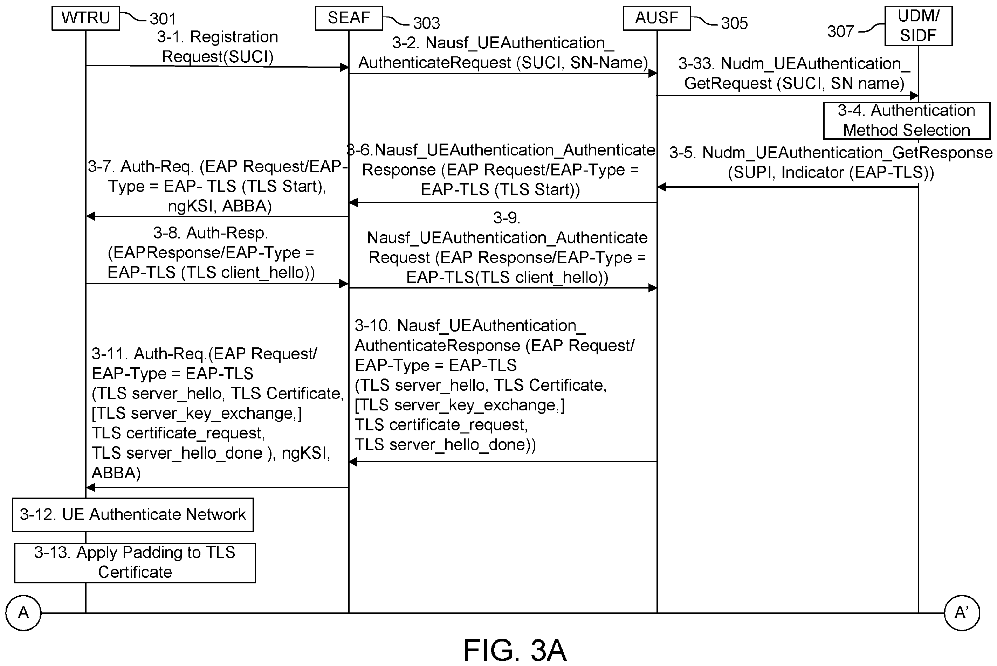

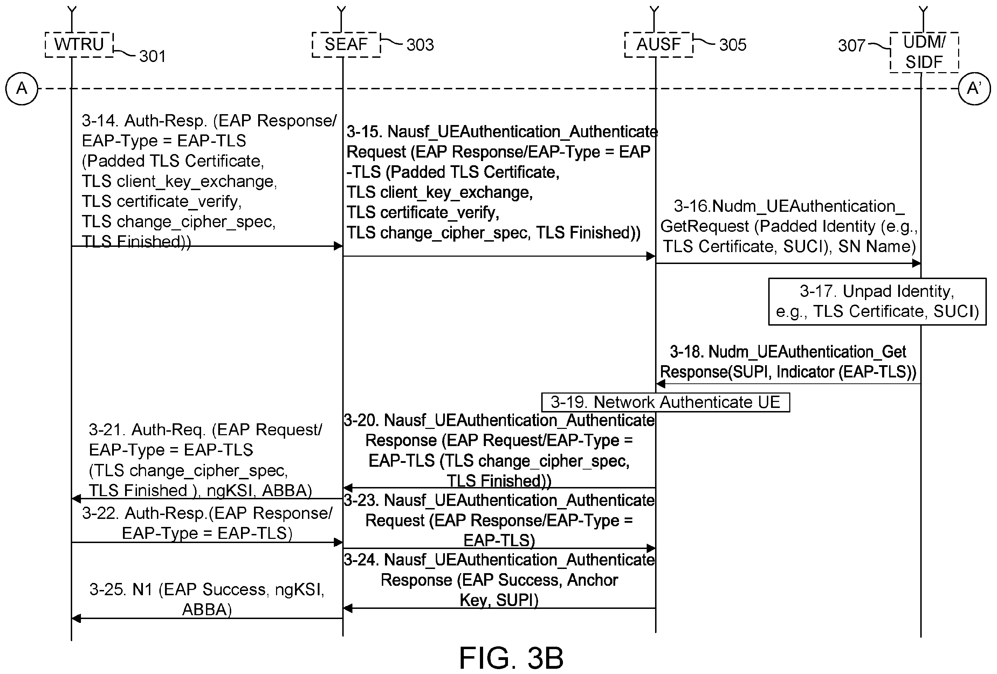

FIGs. 3A and FIG. 3B describe a first embodiment. Note that FIG. 3 is based on and modifies the B.2.1.1-1: Using EAP-TLS Authentication Procedures over 5G Networks for initial authentication found in 3GPP TS 33.501, Annex B. The terms steps and messages in FIGS. 3A and 3B may be used interchangeably.

Initially, the WTRU 301 sends the Registration Request message 3-1 to the Security Anchor Function (SEAF), containing SUCI or "anonymous" as the Network Access Identifier (NAI) username if SUPI in NAI format is used and anonymous authentication is chosen. If the SUPI is in NAI format, only the username part of the NAI is encrypted using the selected protection scheme and included in the SUCI, together with the realm part in the NAI needed for Unified Data Management (UDM) routing.

Privacy considerations are described in Clause B.2.2 of 3GPP TS 33.501, Annex B.

Next, the SEAF sends Nausf_UEAuthentication_Authenticate Request message 3-2 to the Authentication Server Function (AUSF) 305. The SUCI and the serving network name (as described in clause 6.1.1.4 of 3GPP TS 33.501) are included in the message. If SUPI in NAI format is selected and anonymous authentication is chosen, the username of NAI is used as "anonymous" or is left empty.

The AUSF then sends the Nudm_UEAuthentication_Get Request 3-3, containing SUCI and the serving network name, to UDM 307. The general rules for UDM selection apply.

The Subscription Identifier De-concealing Function (SIDF) located within the UDM 307 de-conceals the SUCI to SUPI if SUCI is received in the message. The UDM then selects the primary authentication method, as represented in 3-4 in FIG. 3.

If the UDM 307 chooses to use EAP-TLS, it sends the SUPI and an indicator to choose EAP-TLS to AUSF in the Nudm_UEAuthentication _Get Response 3-5.

With the received SUPI and the indicator, the AUSF 305 chooses EAP-TLS as the authentication method. The AUSF sends the Nausf_UEAuthentication_Authenticate Response message 6-6 containing the EAP-Request/EAP-TLS [TLS start] message to the SEAF 303.

The SEAF 303 forwards the EAP-Request/EAP-TLS [TLS start] in the Authentication Request message 3-7 to the WTRU 301. This message also includes the Key Set Identifier ngKS) and the Anti-Bidding Between Architectures (ABBA) parameter. In fact, the SEAF 303 shall always include the ngKSI and ABBA parameters in all EAP-Authentication request messages. ngKSI will be used by the WTRU and AMF to identify the partial native security context that is created if the authentication is successful. The SEAF shall set the ABBA parameter as defined in Annex A.7.1 of 3GPP TS 33.501. During an EAP authentication, the value of the ngKSI and the ABBA parameter sent by the SEAF to the WTRU shall not be changed.

After receiving the EAP-TLS [TLS-start] message from the SEAF, the WTRU replies with an EAP-Response/EAP-TLS $\left⌈client_hello\right⌉$ to the SEAF 303 in the Authentication Response message 3-8. The contents of TLS client_hello are defined in the TLS specification of the TLS version in use.

The EAP framework supports the negotiation of EAP methods. If the WTRU does not support EAP-TLS, it should follow the rule described in 3GPP Request for Comments (RFC) 3748 Extensible Authentication Protocol (EAP) to negotiate another EAP method. In a 5G system, UDM typically knows which EAP method and credentials are supported by the subscriber, and, consequently, EAP based negotiation may never be used.

The SEAF 303 forwards the EAP-Response/EAP-TLS [client hello] message to the AUSF 305 in the Nausf_UEAuthentication_Authenticate Request 3-9.

The AUSF 305 replies to the SEAF 303 with EAP-Request/EAP-TLS in the Nausf_UEAuthentication_Authenticate Response 3-10, which further includes information elements such as server_hello, server_certificate, server_key_exchange, certificate_request, server_hello_done. These information elements are defined in the RFCs for the corresponding TLS version in use.

The SEAF 303 forwards the EAP-Request/EAP-TLS message with server_hello and other information elements to the WTRU through an Authentication Request message 3-11. This message also includes the ngKSI and the ABBA parameter. The SEAF shall set the ABBA parameter as defined in Annex A.7.1 of 3GPP TS 33.501.

At 3-12, the WTRU 301 authenticates the server with the received message11.

The WTRU is required to be pre-configured with a WTRU certificate and also certificates that can be used to verify server certificates.

At 3-13, the WTRU 301 applies padding to the whole WTRU X.509 certificate. This may be extended to cleartext comprising any of the following: identifiers, parameters, credentials, tokens, etc.

If the TLS server authentication is successful, then the WTRU replies with EAP-Response/EAP-TLS in an Authentication Response message 3-14, which further contains information element such as client_certificate, client_key_exchange, client_certificate_verify, change_cipher_spec, client_finished, etc. Privacy considerations are described in Clause B.2.1.2 of 3GPP TS 33.501.

The SEAF 303 forwards the message with EAP-Response/EAP-TLS message with client_certificate and other information elements to the AUSF 305 in the Nausf_UEAuthentication_Authenticate Request 3-15.

The AUSF 305 sends the Nudm_UEAuthentication_Get Request 3-16, containing SUCI (identity, parameters, credentials, tokens, etc.) and the serving network name, to UDM 307. The general rules for UDM selection apply.

At 3-17, the SIDF unpads the information padded in step 13 cleartext comprising the identity, parameters, credentials, tokens, etc.

The SIDF located within the UDM de-conceals the SUCI to SUPI if SUCI is received in the message, or identity, parameters, credentials, tokens, etc. The UDM then selects the primary authentication method and transmits that information to the AUSF 305 in a Nudm_UEAuthentication_GetResponse 3-18.

At 3-19, the AUSF 305 authenticates the WTRU based on the message received. The AUSF verifies that the client certificate provided by the WTRU belongs to the subscriber identified by the SUPI. If there is a mismatch in the subscriber identifiers in the SUPI, the AUSF does not accept the client certificate. If the AUSF has successfully verified this message, the AUSF continues to step 3-19, otherwise it returns an EAP-failure.

The AUSF is required to be pre-configured with the root or any intermediary Certificate Authority (CA) certificates that can be used to verify WTRU certificates. Deployment of Certificate Revocation Lists (CRLs) and Online Certificate Status Protocol (OCSP) are described in clause B.2.2.

The AUSF 305 sends an EAP-Request/EAP-TLS message with change_cipher_spec and server_finished to the SEAF 303 in the Nausf_UEAuthentication_Authenticate Response 3-20.

The SEAF 303 forwards EAP-Request/EAP-TLS message from step 20 to the WTRU 301 within an Authentication Request message 3-21. This message also includes the ngKSI and the ABBA parameter. The SEAF shall set the ABBA parameter as defined in Annex A.7.1 of 3GPP TS 33.501.

The WTRU 301 sends an empty EAP-TLS message to the SEAF in an Authentication Response message 3-22.

The SEAF 303 further forwards the EAP-Response/EAP-TLS message to the AUSF 305 in the Nausf_UEAuthentication_Authenticate Request 3-23.

The AUSF 305 uses the most significant 256 bits of the Extended Master Session Key (EMSK) as the Authentication Server Function Key (K_{AUSF}) and then calculates K_{SEAF} from K_{AUSF} as described in Annex A.6 of 3GPP TS 33.501. The AUSF 305 sends an EAP-Success message to the SEAF 303 together with the SUPI and the derived anchor key in the Nausf_UEAuthentication_Authenticate Response 3-24.

The SEAF 303 forwards the EAP-Success message to the WTRU 301 in N1 message 25 and the authentication procedure is finished. This message also includes the ngKSI and the ABBA parameter. The SEAF shall set the ABBA parameter as defined in Annex A.7.1 of 3GPP TS 33.501. Then, the SEAF derives the K_{AMF} from the K_{SEAF}, the ABBA parameter, and the SUPI according to Annex A.7 of 3GPP TS 33.501, and provides the ngKSI and the KAMF to the AMF.

On receiving the EAP-Success message 3-25, the WTRU 301 derives EMSK and uses the most significant 256 bits of the EMSK as the K_{AUSF} and then calculates K_{SEAF} in the same way as the AUSF. The WTRU derives the K_{AMF} from the K_{SEAF}, the ABBA parameter and the SUPI according to Annex A.7 of 3GPP TS 33.501.

Note that step/message 3-25 could be an NAS Security Mode Command or Authentication Result.

The ABBA parameter is included to enable the bidding down protection of security features that may be introduced later.

Note that as an implementation option, the WTRU may create the temporary security context as described in step/message 3-25 after receiving the EAP message that allows EMSK to be calculated. The WTRU turns this temporary security context into a partial security context when it receives the EAP Success. The WTRU removes the temporary security context if the EAP authentication fails.

### WTRU and network based embodiment to obscure the length of identities and/or parameters during EAP-TTLS SNPN authentication with AAA server and UDM containing SIDF

A second embodiment applies the principles described hereinabove to provide a WTRU and network based solution to obscure the length of identities and/or parameters during EAP-TTLS SNPN authentication with AAA server using padding of variable length parameters prior to TTLS encryption.

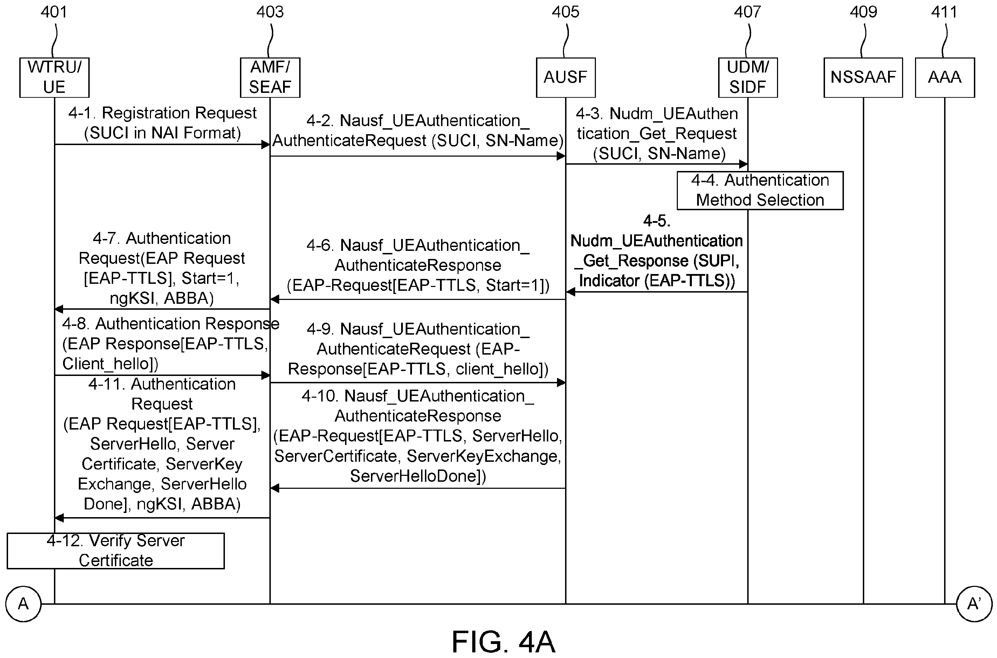

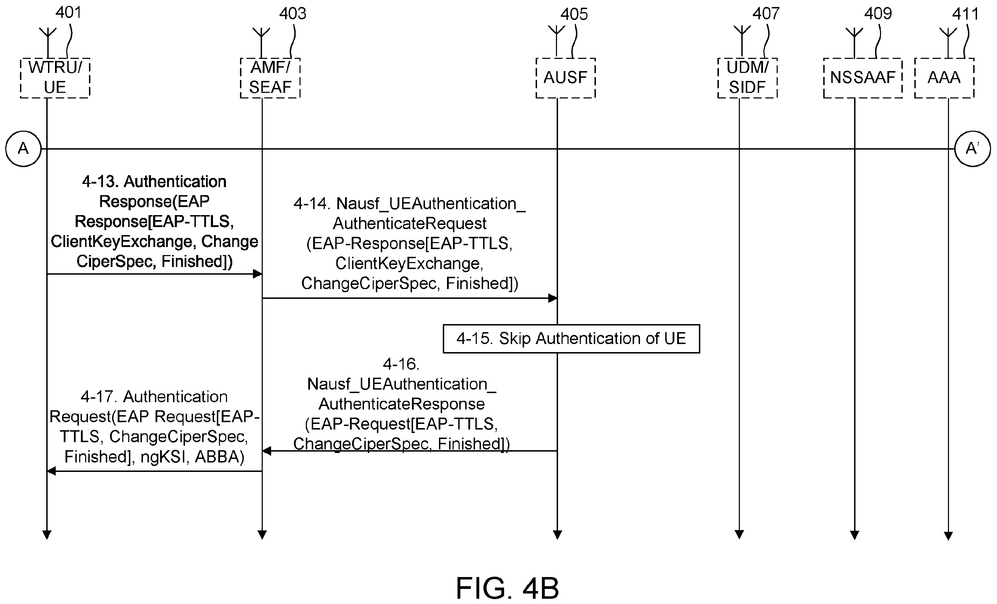

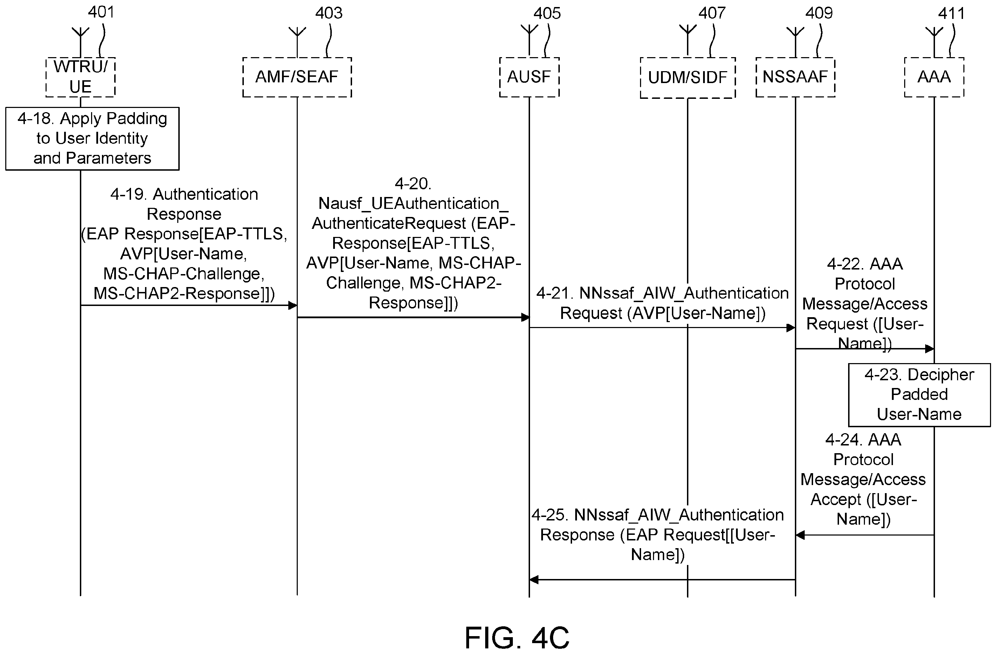

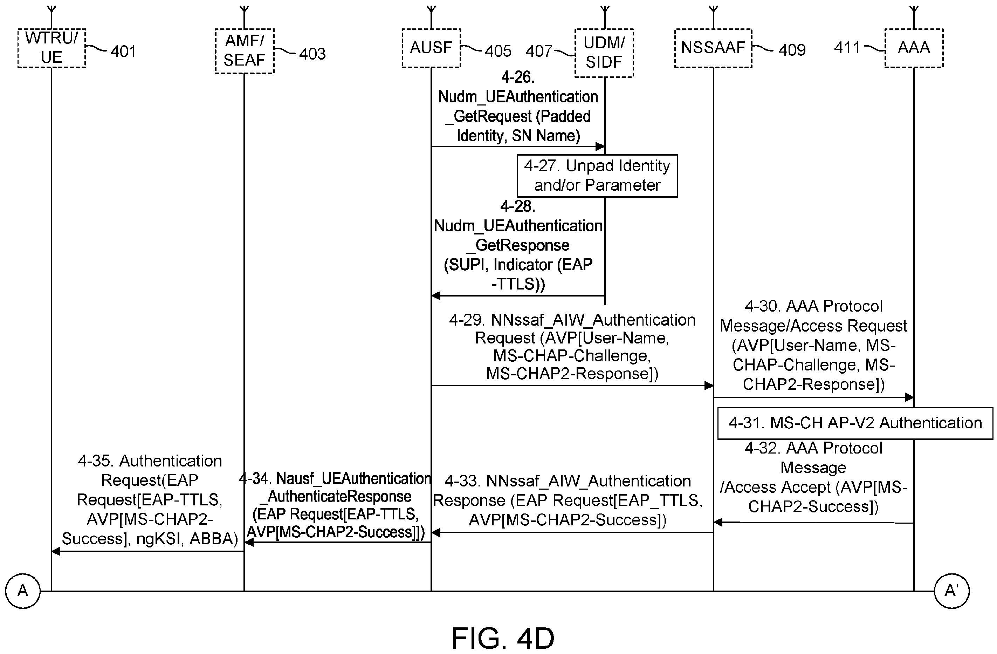

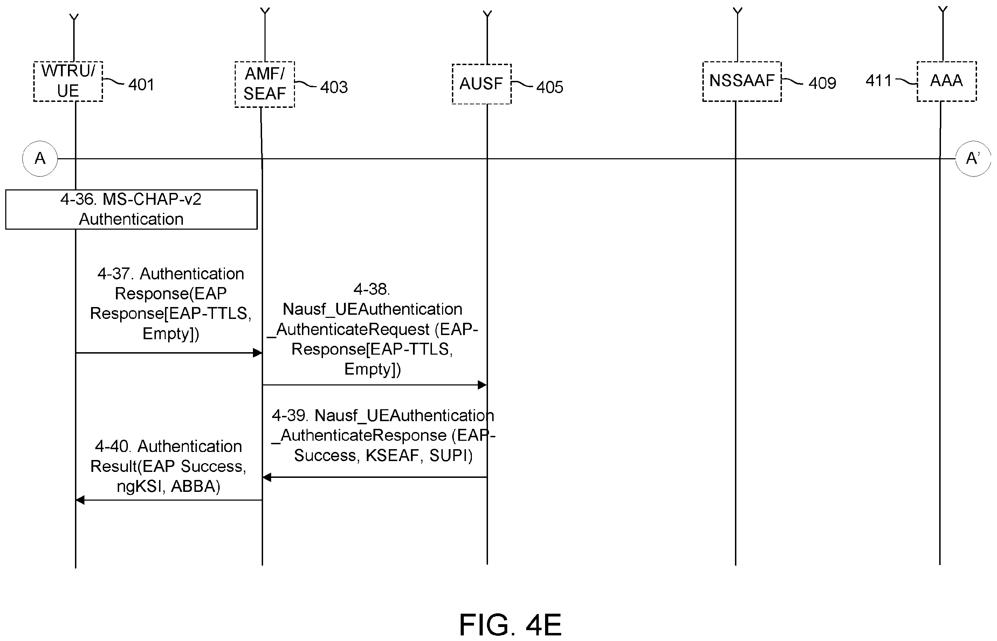

FIGS. 4A, 4B, 4C, 4D, and 4E collectively comprise a signal flow diagram describing an exemplary implementation of this embodiment. Note that FIGS. 4A, 4B, 4C, 4D, and 4E are based on Figure U.2-1: Primary authentication using EAP-TTLS and AAA from the 3GPP TS 33.501, Annex U. The terms steps and messages in FIGS. 4A- 4E may be used interchangeably.

Prior to the activities depicted in FIGS. 4A, 4B, and 4C, the WTRU is configured with the trust anchor needed to authenticate the certificate of the EAP-TTLS server running on the AUSF. Further, the WTRU is configured with the credentials required to authenticate with the AAA server.

Steps or messages 4-1through 4-17 in FIGS. 4A, 4B, 4C, 4D, and 4E are the same as steps/messages 1-17 in clause B.2.2.1, Annex B of 3GPP TS 33.501 (upon which FIGs. 3A and 3B are based, but with significant modifications), except: In step 4-1 of FIG. 4A, the SUPI in the NAI format, i.e., username@realm, is used. In step 4-2, the AMF/SEAF 403 sends an authentication request. In step 4-3, the AUSF 405 sends an authentication request to the UDM/SIDF 407. At step 4-4, the UDM/SIDT makes an authentication method selection. In step 4-5, EAP-TTLS is selected by the UDM 407 as the authentication method. In steps 4-6, through step 4-17, EAP-TTLS phase 1 is executed between the AUSF 405 and the WTRU 401. EAP-Type is set to EAP-TTLS and the authentication of the WTRU using TLS client certificate is skipped. Since TLS client certificate is not used in EAP-TTLS, the WTRU need not be configured with a WTRU certificate.

Then, at 4-18, the WTRU 401 applies padding to the username and password as per MS-CHAP-v2 used as the example in Annex U of TS 33.501. Such padding can be applied to cleartext of any of identity, parameters, credentials, tokens, passwords, etc.

After EAP-TTLS phase 1 is successfully completed, the WTRU 401 runs EAP-TTLS phase 2 authentication with the AAA as specified in IETF RFC 5281 Extensible Authentication Protocol Tunneled Transport Layer Security via Network Slice-Specific Authentication and Authorization (NSSAAF), as shown by messages 4-19 and 4-20. The phase 2 authentication method used is outside the scope of the present document, but MS-CHAPv2 is depicted here as an example to show that the Nnssaaf_AIW_Authentication service offered by NSSAAF carries AVPs if the phase 2 authentication method is non-EAP. As referenced in section 14.1.11 of IETF RFC 5281, allowing the use of a phase 2 (inner) authentication method outside of tunnelled protocol leads to Man-in-the-Middle (MitM) vulnerability. Thus, it is assumed that the WTRU does not allow the use of a phase 2 authentication method outside of TLS tunnel (i.e., the WTRU does not respond to requests for phase 2 authentication outside of the TLS tunnel). In environments where the use of phase 2 authentication outside of the tunnelled protocol cannot be prevented, EAP-TTLS implementations need to address this vulnerability by using EAP channel binding or cryptographic binding described in IETF RFC 6678 Requirements for a Tunnel-Based Extensible Authentication Protocol (EAP) Method.

At step 4-21, the AUSF issues the request to decipher ciphertext comprising the identity, parameters, credentials, tokens, etc. protected by the TLS tunnel to the NSSAAF.

At step 4-22, the NSSAAF issues the AAA request to decipher ciphertext comprising the identity, parameters, credentials, tokens, etc. protected by the TLS tunnel and sends it to the AAA.

At step 4-23, the AAA deciphers the padded ciphertext comprising the identity, parameters, credentials, tokens, etc. protected by the TLS tunnel.

At step 4-24, the AAA replies to the NSSAAF with the padded cleartext of identity, parameters, credentials, tokens, etc.

At step 4-25, the NSSAAF proxies the padded cleartext of identity, parameters, credentials, tokens, etc. to the AUSF.

At step 4-26, the AUSF 405 forwards the padded cleartext comprising the identity, parameters, credentials, tokens, etc. received in step 25 to the SIDF 407 for unpadding.

At 4-27, the SIDF 407 unpads the information padded in step 18 cleartext comprising the identity, parameters, credentials, tokens, etc.

At 4-28, the SIDF 407 forwards the unpadded information and ready to use parameters and identity to the AUSF 405.

Steps 4-29through 4-40 are pre-existing steps in 3GPP TS 33.501, Annex U, and thus, will not be described in detail herein. In steps 4-29 through 4-36, MS-CHAP2 is used per 3GPP TS 33.501, Annex U as an example inner authentication method. (Note that this step is added only because the initial call flow description (steps 18-40) was interrupted by insertion of steps 4-21through 4-28.

After EAP-TTLS phase 2 authentication is successfully completed, the rest of the procedure (i.e., steps 4-37 through 4-40) are the same as steps 18- 21 in clause B.2.1.1, Annex B of 3GPP TS 33.501, except that the EAP-Type is set to EAP-TTLS in the EAP Response message from the WTRU 401 to the AUSF 405.

### WTRU and network based embodiment to obscure the length of identities and/or parameters during EAP-TTLS SNPN authentication with AAA server containing Unpadding Function

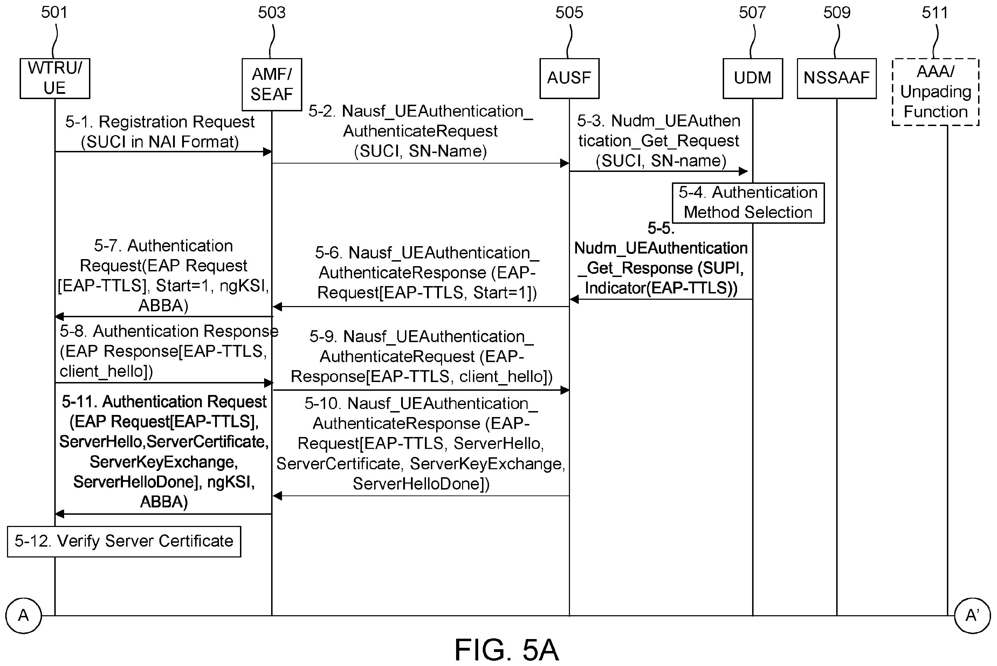

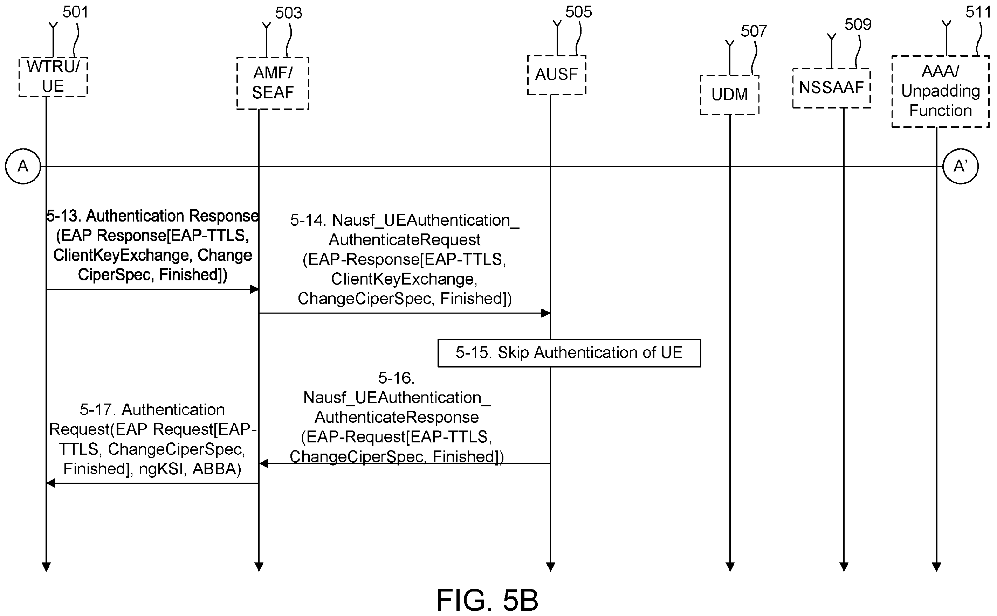

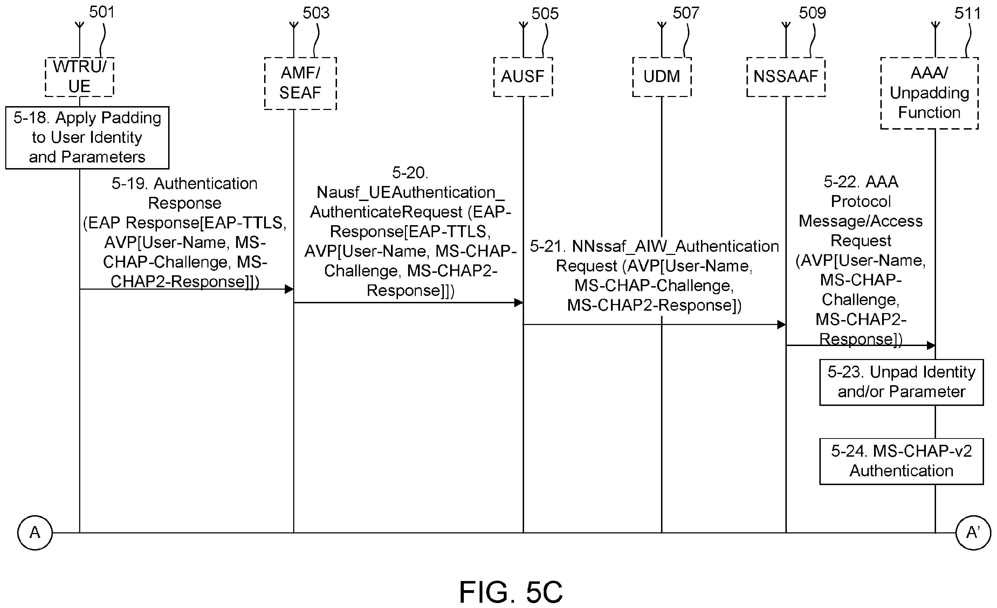

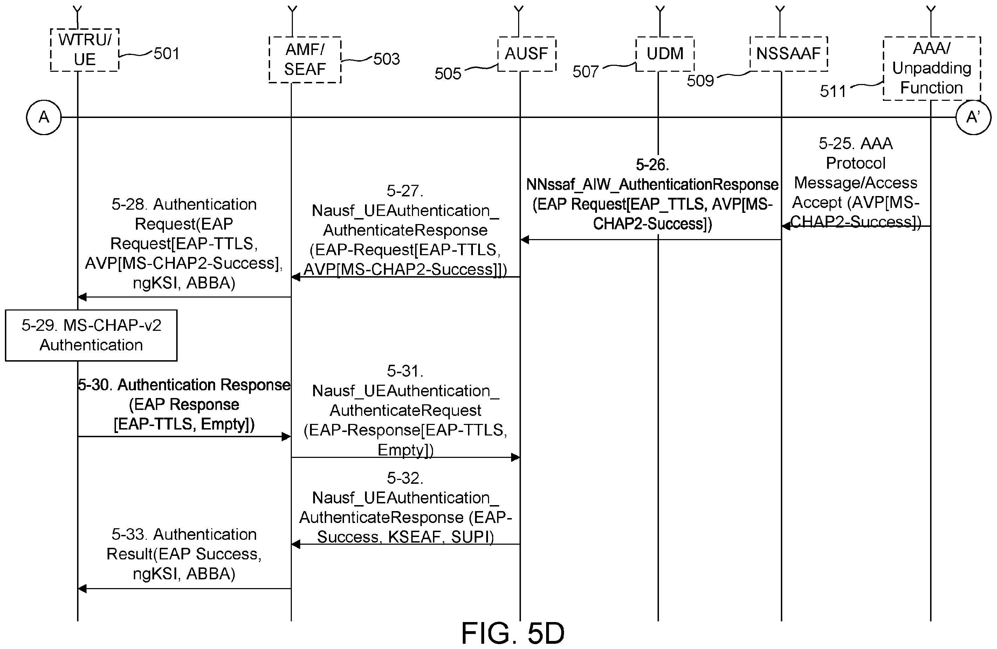

FIGS. 5A, 5B, 5C, and 5D collectively comprise a signal flow diagram describing an exemplary implementation of another embodiment. This embodiment is similar to the embodiment of FIGS. 4A, 4B, 4C, 4D, and 4E, but the un-padding function is at AAA instead of the UDM/SIDF, which offers a simpler flow. The terms steps and messages in FIGS. 5A-5D may be used interchangeably.

Steps 5-1 through 5-20 in the embodiment of FIGS. 5A, 5B, 5C, and 5D are the same as in FIGS. 4A, 4B, 4C, 4D. and 4E and thus, will not be described again.

In this embodiment, the unpadding function resides at the AAA 511, rather than the UDM 507. Therefore, at 5-21, the AUSF 505 forwards the information padded in step 5-18 cleartext comprising the identity, parameters, credentials, tokens, etc. to the NSSAAF 509.

At 5-22, the NSSAAF forwards the information to the AAA 411 in an AAA Protocol message.

At 5-23, the unpadding function at the AAA unpads the information padded in step 18 cleartext comprising the identity, parameters, credentials, tokens, etc.

Then, steps 5-24 through 5-33 are essentially the same as steps 4-26 through 4-35 in FIGS. 4A, 4B, and 4C and thus, will not be described again here.

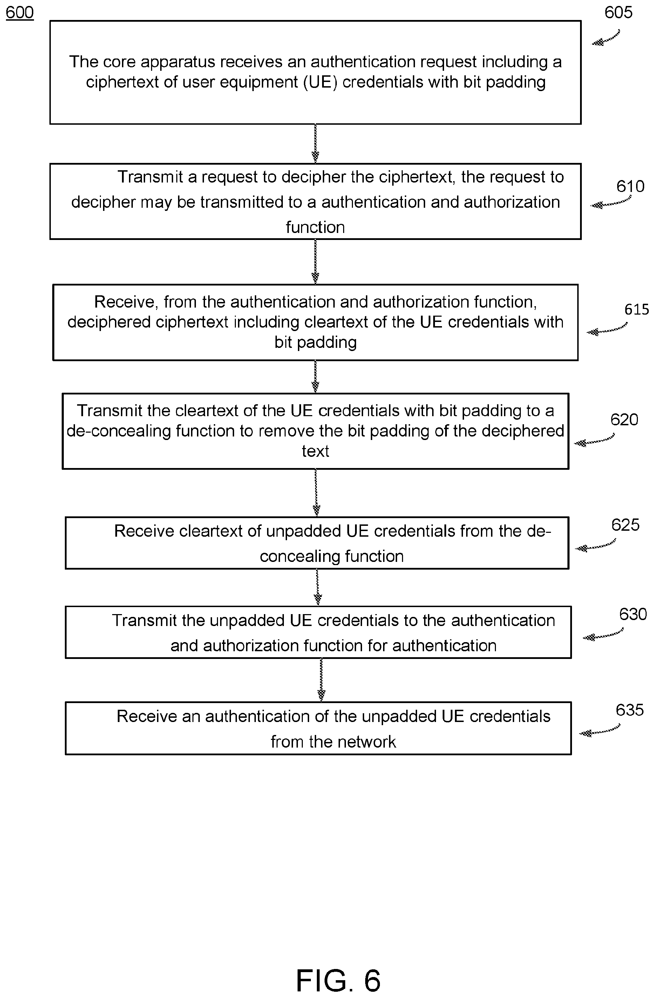

FIG. 6 is an example flow diagram describing a method according to the principles of the disclosure. For example, the method 600 of FIG. 6 may represent events depicted in the

FIG. 4 collection from the perspective of a 5G core system component, such as the authentication server function (AUSF) 405. However, such method functionality may reside in any suitable 5G core component. Herein, the 5G Core component of the method of FIG. 6 may be referred to as the core network apparatus.

In FIG. 6 step 605, the core network apparatus receives an authentication request including a ciphertext of user equipment (UE) credentials with bit padding. In one example, the core network apparatus receives an authentication request from a Security Anchor Function (SEAF) within an Access and Mobility Management Function (AMF). In an example, the core network apparatus may receive an authentication request that includes an extensible authentication protocol tunneled transport layer security (EAP-TTLS) request.

At step 610, the core network apparatus transmits a request to decipher the ciphertext, the request to decipher may be transmitted to a authentication and authorization function. In one example, the core network apparatus transmits a request to decipher the ciphertext of user equipment (UE) credentials with bit padding, the cyphertext may include an encrypted text of one or more of identity, parameters, credentials, and tokens of the WTRU including bit padding. In an example, the core network apparatus transmits a request to decipher the ciphertext to a slice-specific authentication and authorization function (NSSAAF), wherein the ciphertext is protected by a Transport Layer Security (TLS) tunnel.

At step 615, the core network apparatus receives, from the authentication and authorization function, deciphered ciphertext that includes cleartext of the WTRU credentials with bit padding.

At 620, the core network apparatus transmits the cleartext of the WTRU credentials with bit padding to a de-concealing function to remove the bit padding of the deciphered text. In one example, the core network apparatus transmits the cleartext of the WTRU credentials with bit padding to a subscription identifier de-concealing function (SIDF) within a unified data management (UDM) function to remove the bit padding of the deciphered text.

At 625, the core network apparatus receives cleartext of unpadded WTRU credentials from the de-concealing function.

At 630, the core network apparatus transmits the unpadded WTRU credentials to the authentication and authorization function for authentication. Here, the core network apparatus seeks authentication for the WTRU from the network authentication function.

At step 635, if the authentication is successful, the core network apparatus receives an authentication of the unpadded WTRU credentials from the network. Here, the core network apparatus receives an extensible authentication protocol tunneled transport layer security (EAP-TTLS) authentication of the unpadded WTRU credentials.

### CONCLUSION

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein supra and infra are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, MME, EPC, AMF, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.) and/or "permissive" terms (e.g., the term "is" and/or the term "are" may be interpreted as "may" and/or "might", the terms "refer(s)" may be interpreted as "may refer" and/or "might refer", the terms "receive(s)" may be interpreted as "may receive" and/or "might receive", the terms "support(s)" may be interpreted as "may support" and/or "might support", the terms "interface(s)" may be interpreted as "may interface" and/or "might interface", the terms "transmit(s)" may be interpreted as "may interface" and/or "might interface", "may transmit" and/or "might transmit", the terms "send(s)" may be interpreted as "may send" and/or "might send", the terms "does not refer" (and/or the like) may be interpreted as "may not refer" and/or "might not refer", the terms "does not receive" (and/or the like) may be interpreted as "may not receive" and/or "might not receive", the terms "does not support" (and/or the like) may be interpreted as "may not support" and/or "might not support", the terms "does not interface" (and/or the like) may be interpreted as "may not interface" and/or "might not interface", the terms "does not transmit" (and/or the like) may be interpreted as "may not transmit" and/or "might not transmit", the terms "does not send" (and/or the like) may be interpreted as "may not send" and/or "might not send", etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of' followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

The WTRU may be used in conjunction with modules, implemented in hardware and/or software including a Software Defined Radio (SDR), and other components such as a camera, a video camera module, a videophone, a speakerphone, a vibration device, a speaker, a microphone, a television transceiver, a hands free headset, a keyboard, a Bluetooth^{®} module, a frequency modulated (FM) radio unit, a Near Field Communication (NFC) Module, a liquid crystal display (LCD) display unit, an organic light-emitting diode (OLED) display unit, a digital music player, a media player, a video game player module, an Internet browser, and/or any Wireless Local Area Network (WLAN) or Ultra Wide Band (UWB) module.

Although the various embodiments have been described in terms of communication systems, it is contemplated that the systems may be implemented in software on microprocessors/general purpose computers (not shown). In certain embodiments, one or more of the functions of the various components may be implemented in software that controls a general-purpose computer.

In addition, although the invention is illustrated and described herein with reference to specific embodiments, the invention is not intended to be limited to the details shown. Rather, various modifications may be made in the details within the scope and range of equivalents of the claims and without departing from the invention.

## Claims

1. An apparatus for performing an authentication in a core network, the apparatus configured to:
receive an authentication request comprising a ciphertext of at least one wireless transmit/receive unit (WTRU) credential with bit padding;
transmit, to an authentication and authorization function in a first network node, a request to decipher the ciphertext;
receive, from the first network node, a deciphered ciphertext comprising a cleartext of the at least one WTRU credential with bit padding;
transmit the deciphered ciphertext to a de-concealing function in a second network node, to remove the bit padding from the deciphered ciphertext;
receive a cleartext of the at least one WTRU credential without bit padding;
transmit the at least one WTRU credential to the first network node for authentication; and
receive an authentication of the at least one WTRU credential.

2. The apparatus of claim 1, wherein the apparatus is an authentication server function (AUSF) in the core network.

3. The apparatus of claim 1 or 2, wherein the apparatus receives the authentication request from a security anchor function (SEAF) in a third network node.

4. The apparatus of claim 3, wherein the SEAF is within an access and mobility management function (AMF) in the third network node.

5. The apparatus of any of claims 1 to 4, wherein the apparatus receives an extensible authentication protocol tunneled transport layer security (EAP-TTLS) request.

6. The apparatus of any of claims 1 to 5, where in the ciphertext of the at least one WTRU credential with bit padding comprises an encrypted text of one or more of: an identity, a parameter, a credential, or a token associated with a WTRU including bit padding.

7. The apparatus of any of claims 1 to 6, wherein the authentication and authorization function is a slice-specific authentication and authorization function (NSSAAF).

8. The apparatus of any of claims 1 to 7, wherein the request to decipher the ciphertext comprises the request to decipher the ciphertext of at least one of: an identity, a parameter, a credential, or a token cypher-protected by a transport layer security (TLS) tunnel.

9. The apparatus of any of claims 1 to 8, wherein the apparatus transmits the cleartext of the at least one WTRU credential with bit padding to a subscription identifier de-concealing function (SIDF) to remove the bit padding.

10. A method performed by a network apparatus of a core network, the method comprising:
receiving an authentication request comprising a ciphertext of at least one wireless transmit/receive unit (WTRU) credential with bit padding;
transmitting, to an authentication and authorization function in a first network node, a request to decipher the ciphertext;
receiving, from the first network node, a deciphered ciphertext comprising a cleartext of the at least one WTRU credential with bit padding;
transmitting the deciphered ciphertext to a de-concealing function in a second network node to remove the bit padding from the deciphered ciphertext;
receiving a cleartext of the at least one WTRU credential without bit padding;
transmitting the at least one WTRU credential to the first network node for authentication; and
receiving an authentication of the at least one WTRU credential.

11. The method of claim 10, wherein receiving the authentication request comprises receiving an extensible authentication protocol tunneled transport layer security (EAP-TTLS) request.

12. The method of claim 10 or 11, transmitting the request to decipher the ciphertext comprises transmitting the request to decipher the ciphertext of the at least one WTRU credential with bit padding, and wherein the ciphertext comprises an encrypted text of one or more of: an identity, a parameter, a credential, or a token associated with a WTRU including bit padding.

13. The method of any of claims 10 to 12, wherein transmitting the request to decipher the ciphertext comprises transmitting the request to a slice-specific authentication and authorization function (NSSAAF), and wherein the ciphertext is protected by a transport layer security (TLS) tunnel.

14. The method of any of claims 10 to 13, wherein transmitting the deciphered ciphertext to the de-concealing function to remove the bit padding from the deciphered ciphertext comprises transmitting the cleartext with bit padding to a subscription identifier de-concealing function (SIDF) within a unified data management (UDM) function to remove the bit padding from the deciphered ciphertext.

15. The method of any of claims 10 to 14, wherein receiving an authentication of the at least one WTRU credential comprises receiving an extensible authentication protocol tunneled transport layer security (EAP-TTLS) authentication of the at least one WTRU credential without bit padding.

## Patentansprüche

1. Vorrichtung zum Ausführen einer Authentifizierung in einem Kernnetz, wobei die Vorrichtung konfiguriert ist zum:
Empfangen einer Authentifizierungsanforderung, die einen verschlüsselten Text mindestens einer Authentifizierungsinformation einer drahtlosen Sende/Empfangs-Einheit (WTRU-Authentifizierungsinformation) mit Bitauffüllung umfasst;
Senden einer Anforderung zum Entschlüsseln des verschlüsselten Texts an eine Authentifizierungs- und Autorisierungsfunktion in einem ersten Netzknoten;
Empfangen eines entschlüsselten verschlüsselten Texts, der einen Klartext der mindestens einen WTRU-Authentifizierungsinformation mit Bitauffüllung umfasst, von dem ersten Netzknoten;
Senden des entschlüsselten verschlüsselten Texts an eine Enthüllungsfunktion in einem zweiten Netzknoten, um die Bitauffüllung aus dem entschlüsselten verschlüsselten Text zu entfernen;
Empfangen eines Klartexts der mindestens einen WTRU-Authentifizierungsinformation ohne Bitauffüllung;
Senden der mindestens einen WTRU-Authentifizierungsinformation an den ersten Netzknoten zur Authentifizierung; und
Empfangen einer Authentifizierung der mindestens einen WTRU- Authentifizierungsinformation.

2. Vorrichtung nach Anspruch 1, wobei die Vorrichtung eine Authentifizierungsserverfunktion (AUSF) in dem Kernnetz ist.

3. Vorrichtung nach Anspruch 1 oder 2, wobei die Vorrichtung die Authentifizierungsanforderung von einer Sicherheitsankerfunktion (SEAF) in einem dritten Netzknoten empfängt.

4. Vorrichtung nach Anspruch 3, wobei die SEAF in einer Zugriffs- und Mobilitätsmanagementfunktion (AMF) in dem dritten Netzknoten ist.

5. Vorrichtung nach einem der Ansprüche 1 bis 4, wobei die Vorrichtung eine Anforderung eines Tunnelverfahrens mit TLS eines erweiterbaren Authentifizierungsprotokolls (EAP-TTLS-Anforderung) empfängt.

6. Vorrichtung nach einem der Ansprüche 1 bis 5, wobei der verschlüsselte Text der mindestens einen WTRU-Authentifizierungsinformation mit Bitauffüllung einen verschlüsselten Text eines oder mehrerer der Folgenden umfasst: einer Identität, eines Parameters, einer Authentifizierungsinformation oder eines einer WTRU zugeordneten Tokens, das eine Bitauffüllung enthält.

7. Vorrichtung nach einem der Ansprüche 1 bis 6, wobei die Authentifizierungs- und Autorisierungsfunktion eine Slice-spezifische Authentifizierungs- und Autorisierungsfunktion (NSSAAF) ist.

8. Vorrichtung nach einem der Ansprüche 1 bis 7, wobei die Anforderung zum Entschlüsseln des verschlüsselten Texts die Anforderung zum Entschlüsseln des verschlüsselten Texts mindestens eines der Folgenden umfasst: einer Identität, eines Parameters, einer Authentifizierungsinformation oder eines durch einen Transportschichtsicherheitstunnel (TLS-Tunnel) verschlüsselungsgeschützten Tokens.

9. Vorrichtung nach einem der Ansprüche 1 bis 8, wobei die Vorrichtung den Klartext der mindestens einen WTRU-Authentifizierungsinformation mit Bitauffüllung zum Entfernen der Bitauffüllung an eine Funktion zur Entschleierung der Teilnehmerkennung (SIDF) sendet.

10. Verfahren, das durch eine Netzvorrichtung eines Kernnetzes ausgeführt wird, wobei das Verfahren umfasst:
Empfangen einer Authentifizierungsanforderung, die einen verschlüsselten Text mindestens einer Authentifizierungsinformation einer drahtlosen Sende/Empfangs-Einheit (WTRU-Authentifizierungsinformation) mit Bitauffüllung umfasst;
Senden einer Anforderung zum Entschlüsseln des verschlüsselten Texts an eine Authentifizierungs- und Autorisierungsfunktion in einem ersten Netzknoten;
Empfangen eines entschlüsselten verschlüsselten Texts, der einen Klartext der mindestens einen WTRU-Authentifizierungsinformation mit Bitauffüllung umfasst, von dem ersten Netzknoten;
Senden des entschlüsselten verschlüsselten Texts an eine Enthüllungsfunktion in einem zweiten Netzknoten, um die Bitauffüllung aus dem entschlüsselten verschlüsselten Text zu entfernen;
Empfangen eines Klartexts der mindestens einen WTRU-Authentifizierungsinformation ohne Bitauffüllung;
Senden der mindestens einen WTRU-Authentifizierungsinformation an den ersten Netzknoten zur Authentifizierung; und
Empfangen einer Authentifizierung der mindestens einen WTRU- Authentifizierungsinformation.

11. Verfahren nach Anspruch 10, wobei das Empfangen der Authentifizierungsanforderung das Empfangen einer Anforderung eines Tunnelverfahrens mit TLS eines erweiterbaren Authentifizierungsprotokolls (EAP-TTLS-Anforderung) umfasst.

12. Verfahren nach Anspruch 10 oder 11, wobei das Senden der Anforderung zum Entschlüsseln des verschlüsselten Texts das Senden der Anforderung zum Entschlüsseln des verschlüsselten Texts der mindestens einen WTRU-Authentifizierungsinformation mit Bitauffüllung umfasst und wobei der verschlüsselten Text einen verschlüsselten Text eines oder mehrerer der Folgenden umfasst: einer Identität, eines Parameters, einer Authentifizierungsinformation oder eines einer WTRU zugeordneten Tokens, das eine Bitauffüllung enthält.

13. Verfahren nach einem der Ansprüche 10 bis 12, wobei das Senden der Anforderung zum Entschlüsseln des verschlüsselten Texts das Senden der Anforderung an eine Slice-spezifische Authentifizierungs- und Autorisierungsfunktion (NSSAAF) umfasst und wobei der verschlüsselten Text durch einen Transportschichtsicherheitstunnel (TLS-Tunnel) geschützt ist.

14. Verfahren nach einem der Ansprüche 10 bis 13, wobei das Senden des entschlüsselten verschlüsselten Texts an die Enthüllungsfunktion zum Entfernen der Bitauffüllung aus dem entschlüsselten verschlüsselten Text das Senden des Klartexts mit Bitauffüllung an eine Abonnentenkennungs-Enthüllungsfunktion (SIDF) in einer vereinheitlichten Datenmanagementfunktion (UDM-Funktion), um die Bitauffüllung aus dem entschlüsselten verschlüsselten Text zu entfernen, umfasst.

15. Verfahren nach einem der Ansprüche 10 bis 14, wobei das Empfangen einer Authentifizierung der mindestens einen WTRU- Authentifizierungsinformation das Empfangen einer Authentifizierung eines Tunnelverfahrens mit TLS eines erweiterbaren Authentifizierungsprotokolls (EAP-TTLS-Authentifizierung) der mindestens einen WTRU-Authentifizierungsinformation ohne Bitauffüllung umfasst.

## Revendications

1. Appareil pour effectuer une authentification dans un réseau central, l'appareil étant configuré pour :
recevoir une demande d'authentification comprenant un texte chiffré d'au moins une information d'authentification d'unité d'émission/de réception sans fil (WTRU) avec remplissage de bits ;
transmettre, à une fonction d'authentification et d'autorisation dans un premier nœud de réseau, une demande de déchiffrement du texte chiffré ;
recevoir, en provenance du premier nœud de réseau, un texte chiffré déchiffré comprenant un texte en clair de l'au moins une information d'authentification de WTRU avec remplissage de bits ;
transmettre le texte chiffré déchiffré à une fonction de démasquage dans un deuxième nœud de réseau pour supprimer le remplissage de bits du texte chiffré déchiffré ;
recevoir un texte en clair de l'au moins une information d'authentification de WTRU sans remplissage de bits ;
transmettre l'au moins une information d'authentification de WTRU au premier nœud de réseau à des fins d'authentification ; et
recevoir une authentification de l'au moins une information d'authentification de WTRU.

2. Appareil selon la revendication 1, dans lequel l'appareil est une fonction de serveur d'authentification (AUSF) dans le réseau central.

3. Appareil selon la revendication 1 ou 2, dans lequel l'appareil reçoit la demande d'authentification en provenance d'une fonction d'ancrage de sécurité (SEAF) dans un troisième nœud de réseau.

4. Appareil selon la revendication 3, dans lequel la SEAF se trouve dans une fonction de gestion de l'accès et de la mobilité (AMF) dans le troisième nœud de réseau.

5. Appareil selon l'une quelconque des revendications 1 à 4, dans lequel l'appareil reçoit une demande EAP-TTLS (Extensible Authentication Protocol-Tunneled Transport Layer Security).

6. Appareil selon l'une quelconque des revendications 1 à 5, dans lequel le texte chiffré de l'au moins une information d'authentification de WTRU avec remplissage de bits comprend un texte chiffré de l'un ou de plusieurs d'une identité, d'un paramètre, d'une information d'authentification ou d'un jeton associé à une WTRU incluant un remplissage de bits.

7. Appareil selon l'une quelconque des revendications 1 à 6, dans lequel la fonction d'authentification et d'autorisation est une fonction d'authentification et d'autorisation spécifique à une tranche (NSSAAF).

8. Appareil selon l'une quelconque des revendications 1 à 7, dans lequel la demande de déchiffrement du texte chiffré comprend la demande de déchiffrement du texte chiffré d'au moins l'un d'une identité, d'un paramètre, d'une information d'authentification ou d'un jeton protégé par chiffrement par un tunnel de sécurité de couche de transport (TLS).

9. Appareil selon l'une quelconque des revendications 1 à 8, dans lequel l'appareil transmet le texte en clair de l'au moins une information d'authentification de WTRU avec remplissage de bits à une fonction de démasquage d'identifiant d'abonnement (SIDF) pour supprimer le remplissage de bits.

10. Procédé mis en œuvre par un appareil réseau d'un réseau central, le procédé comprenant :
la réception d'une demande d'authentification comprenant un texte chiffré d'au moins une information d'identification d'unité d'émission/de réception sans fil (WTRU) avec remplissage de bits ;
la transmission, à une fonction d'authentification et d'autorisation dans un premier nœud de réseau, d'une demande de déchiffrement du texte chiffré ;
la réception, en provenance du premier nœud de réseau, d'un texte chiffré déchiffré comprenant un texte en clair de l'au moins une information d'authentification de WTRU avec remplissage de bits ;
la transmission du texte chiffré déchiffré à une fonction de démasquage dans un deuxième nœud de réseau pour supprimer le remplissage de bits du texte chiffré déchiffré ;
la réception d'un texte en clair de l'au moins une information d'authentification de WTRU sans remplissage de bits ;
la transmission de l'au moins une information d'authentification de WTRU au premier nœud de réseau à des fins d'authentification ; et
la réception d'une authentification de l'au moins une information d'authentification de WTRU.

11. Procédé selon la revendication 10, dans lequel la réception de la demande d'authentification comprend la réception d'une demande EAP-TTLS (Extensible Authentication Protocol-Tunneled Transport Layer Security).

12. Procédé selon la revendication 10 ou 11, dans lequel la transmission de la demande de déchiffrement du texte chiffré comprend la transmission de la demande de déchiffrement du texte chiffré de l'au moins une information d'authentification de WTRU avec remplissage de bits, et dans lequel le texte chiffré comprend un texte chiffré de l'un ou de plusieurs d'une identité, d'un paramètre, d'une information d'authentification ou d'un jeton associé à une WTRU incluant le remplissage de bits.

13. Procédé selon l'une quelconque des revendications 10 à 12, dans lequel la transmission de la demande de déchiffrement du texte chiffré comprend la transmission de la demande à une fonction d'authentification et d'autorisation spécifique à une tranche (NSSAAF), et dans lequel le texte chiffré est protégé par un tunnel de sécurité de la couche de transport (TLS).

14. Procédé selon l'une quelconque des revendications 10 à 13, dans lequel la transmission du texte chiffré déchiffré à la fonction de démasquage pour supprimer le remplissage de bits du texte chiffré déchiffré comprend la transmission du texte en clair avec remplissage de bits à une fonction de démasquage d'identifiant d'abonnement (SIDF) dans une fonction de gestion de données unifiée (UDM) pour supprimer le remplissage de bits du texte chiffré déchiffré.

15. Procédé selon l'une quelconque des revendications 10 à 14, dans lequel la réception d'une authentification de l'au moins une information d'authentification de WTRU comprend la réception d'une authentification EAP-TTLS (Extensible Authentication Protocol Tunneled Transport Layer Security) de l'au moins une information d'authentification de WTRU sans remplissage de bits.
